# EUROPEAN PATENT SPECIFICATION

(11) **EP 4 065 904 B1**
(45) Date of publication and mention of the grant of the patent: **22.01.2025**
(21) Application number: 20848729.8
(22) Date of filing: 27.11.2020
(51) Int. Cl.: F24F 5/00, F24F 7/02

(54) **HYBRID VENTILATION AMPLIFIER**
HYBRIDER LÜFTUNGSVERSTÄRKER
AMPLIFICATEUR DE VENTILATION HYBRIDE

(30) Priority: 27.11.2019 PL 43195819; 29.09.2020 PL 43555920
(43) Date of publication of application: 05.10.2022
(73) Proprietor: Hawranek, Jerzy, 00-124 Warszawa (PL)
(72) Inventor: Hawranek, Jerzy, 00-124 Warszawa (PL)
(74) Representative: Korbela, Anna
(86) International application number: PCT/PL2020/000088
(87) International publication number: WO 2021/107793

(56) References cited:
- WO-A2-2014/009688
- GB-A- 2 507 266
- GB-A- 2 511 148
- US-B1- 6 302 778
- US-B1- 9 958 173

## Description

The subject of the invention is a hybrid ventilation amplifier, which also enables the additional recovery of energy from the exhaust air from the facility.

This amplifier is intended for use in various types of ventilation systems, e.g. in vertical gravity ventilation systems (mainly in multi-family residential buildings), where the chimney effect is used (a physical phenomenon occurring in chimneys, in which a spontaneous bottom-up flow of warmer gas is formed), the simplest and oldest way of air exchange in facilities.

Due to the difference in pressure which takes place in the ventilation chimney, the vertical ventilation ducts, under certain weather conditions, discharge warm air from the upper parts of the rooms to the outside.

The developed hybrid air amplifier can also be used in exhaust ventilation systems, i.e. in mechanical ventilation systems in which the air movement is forced by a fan (air handling unit).

Most existing multi-storey buildings use gravity ventilation.

The erected buildings often, even now, fail to be equipped with devices that would force mechanical ventilation of the rooms.

However, according to building standards, buildings higher than six stories must now be equipped with such devices. Mechanical ventilation becomes sometimes necessary as the currently applicable thermal insulation standards are stricter than those adopted earlier.

in days when facilities were erected from small-sized elements, the air was supplied to their interior through numerous slits (openings), and then the air inside the rooms went up automatically.

As a result of the difference in temperature, a chimney draft was created, the natural ventilation and the ventilation of the rooms took place.

In the summer, when the chimney with ventilation ducts is heated by the sunlight, the temperature in it is higher than that in the rooms which guarantees - regardless of the tightness of the facility - the proper operation of gravity ventilation.

However, since newly erected buildings are very well insulated and protected against cooling, temperature loss, infiltration of air and heat - for the same reasons that constitute the value of new facilities - it is also difficult to ensure the proper functioning of gravity ventilation in them.

As a result, in winter, chimneys in new facilities tend to freeze as they are exposed to negative external temperatures, and they are not heated sufficiently with the air that they should discharge.

The direction of the air flow is then reversed. Instead of being taken out of the rooms, it is blown into the rooms through the ventilation ducts.

There are many solutions known that are designed to improve the efficiency of ventilation systems. In the solution being the subject of this invention, the state-of-the-art devices can additionally be used to regulate the proper air flow in each chimney duct.

For example, in the solution being the subject of this invention, the collection and the removal of the appropriate amount of air from each premises can be ensured by a silent damper, described in Polish patent no. PL.230895 "Ventilation damper", submitted for protection on 17 July 2016 (the grant of the patent was announced in WUP on 12/18).

It shows a ventilation damper for a ventilation duct with a membrane partition, mounted inside the duct. Its essence lies in the fact that it has a cylinder placed in the ventilation duct and preferably circumferentially sealed, in which a damper is placed, which has a frame - preferably placed at an acute angle to the walls of the ventilation duct - with an elastic material clasped on it, which consists of two parts thereof, connected by hinges defining the axis of rotation of the frame elements.

The frame is attached to the walls of the ventilation duct and is mounted here directly or indirectly with the tabs introduced into the sockets which are made in the walls, where at least one of the two hinged parts of the frame is connected to the mechanism for closing the ventilation damper.

Another Polish invention, application no. P.418016, presents a "Lower heat source distributor" submitted for protection on 18 July 2016, the essence of which is that it has an expansion chamber, into which the medium from above is introduced using the so-called higher-pressure pipe, and from which the medium is discharged upwards by at least two heating coils. The solution described in this invention makes it possible to obtain more cold that can be used for lowering the temperature in the building.

The aim of the developed invention is to create a ventilation amplifier that will ensure the exhaust of the correct amount of air and which will prevent the reverse flow of the air, and thus will prevent the air from blowing through chimneys into rooms and will guarantee the efficient ventilation in newly erected facilities, as well as will improve its operation in existing facilities where this ventilation is not working (and is not likely to function properly if not modernized).

Whereas British invention, application no. GB2511148A presents a "Grill arrangement" submitted for protection on 24 August 2014 (with priority from 18 June 2013). Its essence lies in the fact that a grill arrangement of a ventilation system comprises a support structure located in an opening in a surface (ceiling), a plurality of spaced curved vanes mounted to the support structure whereby the vanes urge a flow of air entering the grill arrangement from outside the surface to be turned towards a direction parallel to the surface.

The grill may comprise of four, two or one section(s). The vanes may comprise an arcuate portion and a tangential portion, and arranged sequentially towards a centre of the arrangement. Arcuate portions of the vanes may have an equispaced gap and the gap may reduce in size at the tangential portion to accelerate the air. An angle of a line connecting the top of the arcuate portions relative to the horizontal may be ten degrees. The vanes may be configured with no line of sight through the arrangement. A central section of the arrangement may provide direct ventilation therethough or may be closed. The ventilation system may be a natural ventilation system or hybrid system comprising a fan. Modular extensions may be used to make the grill larger.

The essence of the hybrid ventilation amplifier mounted on a roof of a building at an outlet of a ventilation chimney, is that its basic elements are stationary coaxial elements and one moving element. They are in turn:
- a stationary reducer which is narrowed upwards towards an air outlet thereof, narrowing the lumen of the ventilation chimney, and, in use, surrounding the mouth of the ventilation ducts of the ventilation chimney and constituting an envelope of the mouth of the ventilation chimney,
- an expansion dome, which is located centrally over the stationary reducer, the expansion dome being stationary and having a peripheral wall,
- a central and funnel-shaped concave shaped in the upper part of the dome, constituting a distributor and changing, in use, a direction of outgoing air from the ventilation chimney distributing it around the perimeter of the expansion dome and the air flowing is redirected, in use, down the expansion dome to a next element, which is
- a flow exchanger, being arranged for surrounding the ventilation chimney, where an outer wall of the flow exchanger constitutes a lower extension of the peripheral wall of the expansion dome, and an outer diameter of the expansion dome corresponds to an outer diameter of the flow exchanger and in that the hybrid ventilation amplifier further comprises
- a rotatable housing in the shape of a truncated cylinder which protects the expansion dome connected to a flow exchanger located in its bottom, wherein the upper, inclined surface, which is an element of the housing exposed to the sunlight, is lined with photovoltaic panels.

Preferably, a lower, oval and sunlit part of the rotatable housing on its outer side is lined with photovoltaic panels that cover half of the perimeter of the rotatable housing.

Usually, an upper, shaded part of the rotatable housing on its outer side is covered with moss.

Most often, at least one turbine wheel is to be mounted, in use, below the outlet from the ventilation chimney.

Typically, the flow exchanger is made of aluminium strips with a pressed copper tube inside.

Preferably, the flow exchanger is to be connected , in use, via a pipe to a heat pump creating a closed refrigerant circuit.

The advantage of the developed, hybrid ventilation amplifier is obtaining the correct, reliable operation of ventilation in buildings, as the developed device prevents the reversal of the air flow.

The air in the expansion dome protected by a rotatable housing is cooled due to the operation of the flow exchanger.

As a result, a negative pressure is created in the dome and the proper air draft is activated because it is sucked in from the rooms.

Thanks to the use of a hybrid ventilation amplifier, the air correctly moves up the ventilation chimney.

In addition, due to the placement of moss on selected elements of the hybrid ventilation amplifier - around the designed device, the amount of carbon dioxide from the exhaust air which is released to the atmosphere is reduced. In the case of moss, the relation of the base surface that it requires in relation to the bioactive, assimilating surface is very large.

At the same time, when the facility successfully achieves the required air rotation - the developed invention allows for the additional use of energy from the exhaust air. This energy can be used, for example, to heat domestic water.

The subject of the invention, i.e. the hybrid ventilation amplifier, is presented in more detail in the example of execution in the drawings, where:

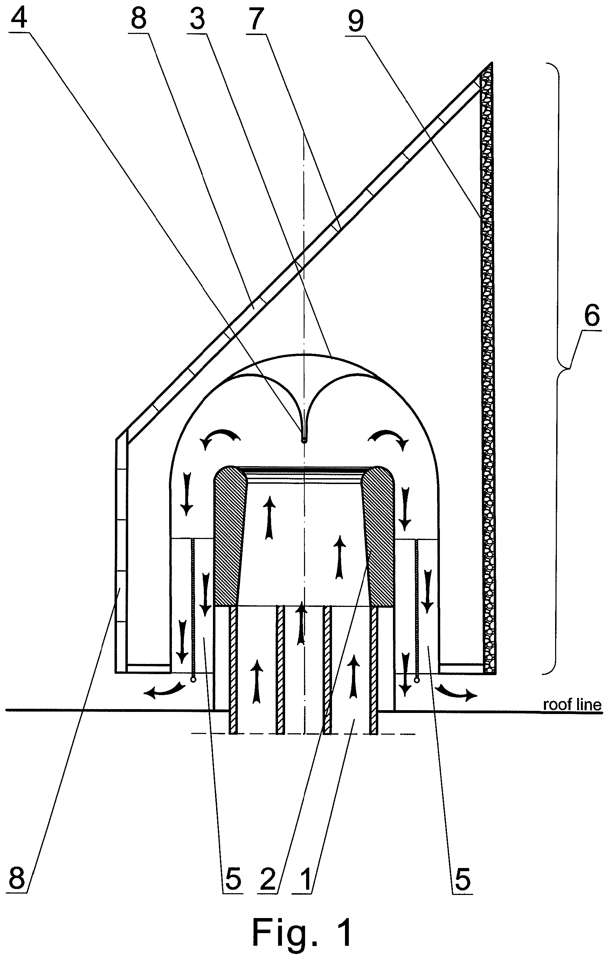

fig. 1 - shows a vertical section through the hybrid ventilation amplifier mounted on the chimney,
fig. 2 - shows a horizontal section through a ventilation chimney surrounded by a flow exchanger (in axial format) and a rotatable housing, while
fig. 3 - shows a horizontal section through a different heat exchanger (wing format) and a rotatable housing.

The invention relates to a hybrid ventilation amplifier that is mounted on the roof of a building at the outlet of the ventilation chimney 1.

The developed hybrid ventilation amplifier has stationary coaxial elements and one moving element, and they consist of:
- reducer 2, accelerating the air flowing out of ventilation chimney 1 and surrounding the mouth of the ventilation ducts of the ventilation chimney 1 and constituting the envelope of the mouth of ventilation chimney 1, where reducer 2 is narrowed upwards (towards the air outlet) and thus accelerates the air discharged from the facility, as the gas expands after passing the narrowed part, therefore, the de Laval's effect is used in reducer 2,
- expansion dome 3, dome 3 which is located centrally over stationary reducer 2 and surrounds it, while similarly to ventilation chimney 1 with reducer 2, expansion dome 3 is stationary,
- a central and funnel-shaped concave formed in the upper part of dome 3, constituting distributor 4 that changes the direction of the air discharged from ventilation chimney 1, distributing it around the perimeter of expansion dome 3 (along its internal walls) and redirects down expansion dome 3 so that it goes to the next element, which is
- flow exchanger 5 (or any other exchanger) surrounding ventilation chimney 1, where the outer wall of the flow exchanger 5 constitutes the lower extension of the peripheral wall of expansion dome 3 (most preferably flow exchanger 5, which is constructed from aluminium strips with a copper tube pressed inside), while the outer diameter of expansion dome 3 corresponds to the outer diameter of flow exchanger 5,
- rotatable housing 6 in the shape of a truncated cylinder, protecting expansion dome 3 which is connected to the flow exchanger 5 located at its bottom (possibly monolithically connected to it), which during the day rotates around a common axis in accordance with the movement of the sun, as it is controlled by a programmed electric motor and follows the sun so that upper, inclined surface 7 of housing 6 was lined with solar panels 8 and exposed to sunlight for as long as possible and photovoltaic panels 8 could obtain as much energy as possible.

The lower, curved (cylindrical) and sunlit part of rotatable housing 6 of the hybrid ventilation amplifier (HVA), as well as upper, inclined surface 7 - on its outer side - is lined with photovoltaic panels 8 (they cover half of rotatable housing 6).

Whereas, the higher, shaded part of rotatable housing 6 - on its outer side - is covered with moss 9, which helps in the assimilation of carbon dioxide from the environment, including the exhaust air.

Thus, rotatable housing 6 provides thermal insulation of ventilation chimney 1 and flow exchanger 5 and their protection against the wind.

As explained, in the lower part of the hybrid ventilation amplifier around ventilation chimney 1, flow exchanger 5 is placed. The air discharged from the building is directed to it, so that it is cooled down by a cool medium, i.e. "chill" ("brain") for example, from a heat pump-assisted borehole.

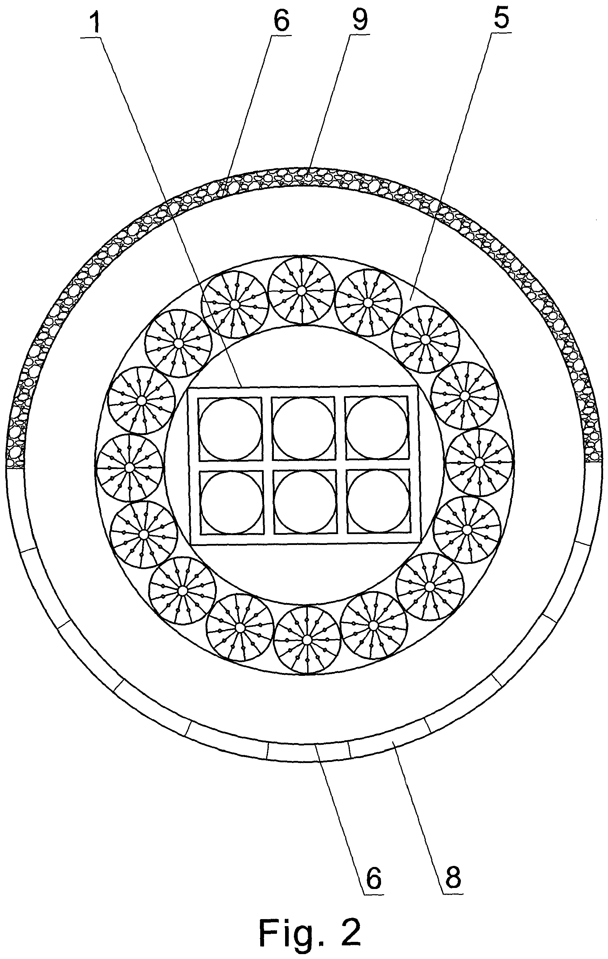

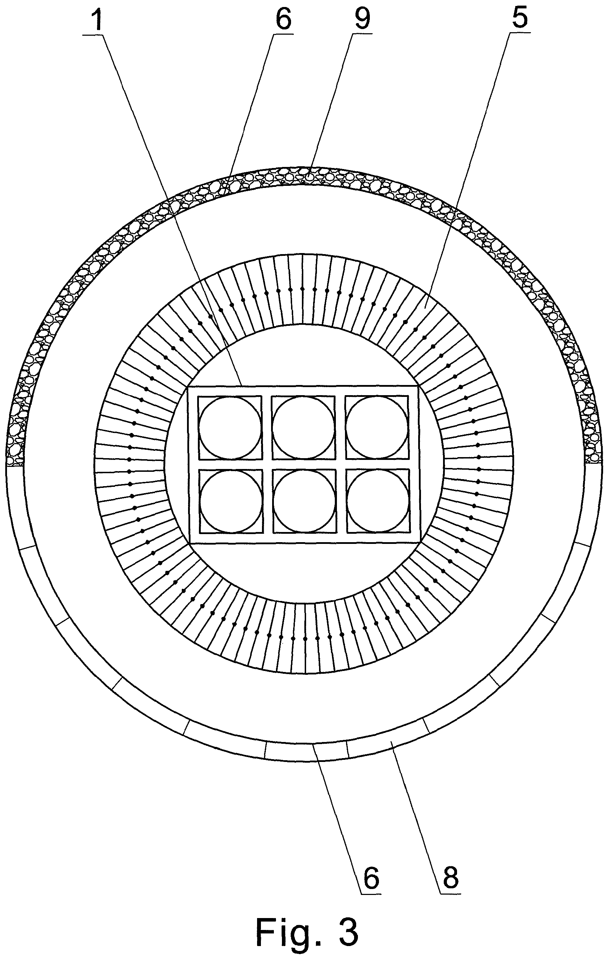

Flow exchanger 5 is made of aluminium strips with a pressed copper tube inside. The length of the strips and their arrangement are selected individually for each hybrid ventilation amplifier depending on the height of the building and the required amount of exhaust air to be effectively removed from the building (for example as shown in fig. 2 - in the axial format or as shown in fig. 3 - in the wing format).

A characteristic feature of the strips (also those used in the developed invention) is the large heat exchange surface between the coolant supplied to them from the well or heat pump, the so-called "chill", and the exhaust air from the building redirected to them.

Flow exchanger 5 is connected to the heat pump e.g. with a pipe located in the building, creating a closed cooling circuit, when the heat pump is supplied from a borehole. It is also possible to use a heat pump of a known design which does not use a borehole and is located, for example, on the roof or in the basement of a building or in a heat node next to the building.

In addition, all ventilation ducts supported by a hybrid ventilation amplifier (HVA) are equipped with state-of-the-art dampers to balance the flows in the individual ventilation ducts, e.g. with a soft damper, which guarantees the proper air flow from the given premises.

As a result of cooling of the exhaust air from the building in flow exchanger 5, its temperature drops from approx. 24°C to approx. 4°C (usually the air exhausted from the rooms has an average temperature of approx. 24°C). It is therefore greatly cooled in flow exchanger 5.

As a result, the cool air falls and a negative pressure is created in expansion dome 3, which forces the correct air draft in each duct of ventilation chimney 1 connected to the hybrid ventilation amplifier.

The air discharged from the building, cooled in the manner described above (regardless of the season), flows freely and moves between the hybrid ventilation amplifier and the roof surface.

Below the outlet from ventilation chimney 1, at least one turbine wheel can be mounted, driven by a stream of air discharged from the building in the described manner. The turbine wheel absorbs the energy of the falling air and converts it into electricity.

In turn, the heat energy received in flow exchanger 5 from the ventilation air (preferably by means of a heat pump) is transferred to the domestic hot water system, and at the moment of surplus it is transferred to the heating system.

The device of the present invention also uses the energy provided by photovoltaic panels 8. They provide energy for the drive of rotatable housing 6, which follows the sun's rays during the day and returns to its starting position after dusk and again waits for the daily working cycle.

During the day, housing 6 rotates around a common axis in accordance with the sun's movement, so that upper, inclined surface 7 of housing 6, which is lined with photovoltaic panels 8, is exposed to the sunlight as long as possible.

The excess energy supplied by photovoltaic panels 8 is stored in the battery. The energy stored therein is used to drive rotatable housing 6 and the surplus is transferred to the building.

### List of elements:

- 1.: ventilation chimney,
- 2.: reducer,
- 3.: expansion dome,
- 4.: distributor,
- 5.: flow exchanger,
- 6.: housing,
- 7.: inclined surface,
- 8.: photovoltaic panel,
- 9,: moss.

## Claims

1. A hybrid ventilation amplifier, mountable on a roof of a building at an outlet of a ventilation chimney (1), wherein its basic elements are stationary coaxial elements and one moving element and they are in turn:
- a stationary reducer (2), which is narrowed upwards towards an air outlet thereof, narrowing the lumen of the ventilation chimney (1) and, in use, surrounding a mouth of ventilation ducts of the ventilation chimney (1) and constituting an envelope of the mouth of the ventilation chimney (1),
- an expansion dome (3) located centrally over the stationary reducer (2), the expansion dome (3) being stationary and having a peripheral wall,
- a central and funnel-shaped concave shaped in the upper part of the dome (3), forming a distributor (4) and changing ,in use, a direction of air flowing from the ventilation chimney (1) distributing it around the perimeter of the expansion dome (3)
**characterized in that** the hybrid ventilation amplifier is arranged such that the air flowing is redirected, in use, down the expansion dome (3) to a next item which is
- a flow exchanger (5) being arranged for surrounding the ventilation chimney (1), where an outer wall of the flow exchanger (5) constitutes a lower extension of the peripheral wall of the expansion dome (3) and an outer diameter of the expansion dome (3) corresponds to an outer diameter of the flow exchanger (5) and wherein the hybrid ventilation amplifier further comprises
- a rotatable housing (6) in the shape of a truncated cylinder protecting the expansion dome (3) which is connected to the flow exchanger (5) located at its bottom, wherein an upper, inclined surface (7), which is the element of the housing (6) exposed to the sunlight, is lined with photovoltaic panels (8).

2. Hybrid ventilation amplifier according to claim 1, **characterized in that** a lower, oval and sunlit part of the rotatable housing (6) on its outer side is lined with photovoltaic panels (8) that cover half of the perimeter of the rotatable housing (6).

3. Hybrid ventilation amplifier according to claim 1 or 2, **characterized in that** an upper, shaded part of the rotatable housing (6) is covered with moss (9) on its outer side.

4. Hybrid ventilation amplifier according to claim 1 or 2 or 3, **characterized in that** at least one turbine wheel is to be mounted, in use, below the outlet from the ventilation chimney (1).

5. Hybrid ventilation amplifier according to one of claims 1 to 4, **characterized in that** the flow exchanger (5) is made of aluminium strips with a pressed copper tube inside.

6. Hybrid ventilation amplifier according to one of claims 1 to 5, **characterized in that** the flow exchanger (5) is to be connected, in use, via a pipe to a heat pump to form a closed refrigerant circuit.

## Patentansprüche

1. Ein Hybrid-Lüftungsverstärker, der auf einem Dach des Gebäudes am Auslauf des Lüftungskamins (1) montierbar ist, wobei seine Bestandteile koaxial angeordnete unbewegliche Elemente und ein bewegliches Element sind, und die Reihenfolge ergibt sich wie folgt:
- eine unbewegliche Reduktionsmuffe (2), die nach oben zum Luftaustritt hin verengt ist, die das Licht des Lüftungskamins (1) verengt und in Betrieb eine Einmündung der Lüftungskanäle des Lüftungskamins (1) umgibt und eine Kaminverkleidung des Lüftungskaminauslaufs (1) bildet,
- eine ausdehnbare Kuppel (3), die sich zentral über der unbeweglichen Reduktionsmuffe (2) befindet, die ausdehnbare Kuppel (3) ist unbeweglich und eine Umlaufwand aufweist,
- eine zentrale und trichterförmige Vertiefung im oberen Teil der Kuppel (3), die einen Verteiler (4) bildet und, in Betrieb, eine Richtung der aus dem Lüftungskamin (1) ausströmenden Luft ändert, indem sie sie rund um die ausdehnbare Kuppel (3) verteilt, **dadurch gekennzeichnet, dass** der Hybrid-Lüftungsverstärker so ausgeführt ist, dass die strömende Luft bei Verwendung der nach unten ausdehnbaren Kuppel (3) zu einem weiteren Element umgeleitet wird, nämlich zu
- einem Stromaustauscher (5), der an die Umgebung des Lüftungskamins (1) angepasst ist, wobei eine äußere Wand des Stromaustauschers (5) eine untere Verlängerung der Umlaufwand der ausdehnbaren Kuppel (3) bildet und ein äußere Durchmesser der ausdehnbaren Kuppel (3) einem äußeren Durchmesser des Stromaustauschers (5) entspricht, wobei der Hybrid-Lüftungsverstärker umfasst auch:
- ein drehbares Gehäuse (6) in Form eines schräg geschnittenen Zylinders, die die ausdehnbare, mit dem unten befindlichen Stromaustauscher (5) verbundene Kuppel (3) abschirmt, wobei eine obere, schräge Fläche (7), die das der Sonne zugewandte Gehäuseelement (6) darstellt - mit Photovoltaikpaneelen (8) ausgekleidet ist.

2. Hybrid-Lüftungsverstärker nach Anspruch 1, **dadurch gekennzeichnet, dass** ein untere, walzenförmige und besonnte Teil des drehbaren Gehäuses (6) an seiner Außenseite mit Photovoltaikpaneelen (8) ausgekleidet ist, die die Hälfte des Umfangs des drehbaren Gehäuses (6) abdecken.

3. Hybrid-Lüftungsverstärker nach Anspruch 1 oder 2, **dadurch gekennzeichnet, dass** ein obere, schattige Teil des drehbaren Gehäuses (6) an seiner Außenseite mit Moos (9) ausgekleidet ist.

4. Hybrid-Lüftungsverstärker nach Anspruch 1 oder 2 oder 3, **dadurch gekennzeichnet, dass** unterhalb des Auslaufs des Lüftungskamins (1) mindestens ein Turbinenrad in Betrieb angebracht ist.

5. Hybrid-Lüftungsverstärker nach einem der Ansprüche 1 bis 4, **dadurch gekennzeichnet, dass** der Stromaustauscher (5) aus Aluminiumstreifen mit einem in der Mitte eingepressten Kupferrohr gebaut wird.

6. Hybrid-Lüftungsverstärker nach einem der Ansprüche 1 bis 5, **dadurch gekennzeichnet, dass** der Stromaustauscher (5) in Betrieb über ein Kabel mit einer Wärmepumpe verbunden ist, um einen geschlossenen Kühlmittelkreislauf zu bilden.

## Revendications

1. Un amplificateur de ventilation hybride, montable sur un toit d'un bâtiment à la sortie d'une cheminée de ventilation (1), ses composants essentiels, qui sont des éléments fixes installés de manière coaxiale les uns par rapport aux autres et un élément mobile, étant les suivants :
- un tube venturi immobile (2), qui est effilé vers le haut en direction d'une sortie d'air, et qui présente une diminution de section transversale par rapport à celle de la cheminée de ventilation (1) et, lors de l'utilisation, qui englobe une sortie des canaux de ventilation de la cheminée de ventilation (1) et forme une enveloppe autour de la sortie de la cheminée de ventilation (1),
- un dôme de décompression (3) situé dans l'axe et au-dessus du tube venturi immobile (2), le dôme de décompression (3) étant immobile et possédant une paroi périphérique,
- une cavité centrale en forme de demi-tore à collier nul dans la partie supérieure du dôme de décompression (3), qui constitue un distributeur (4) et qui modifie la direction du flux d'air sortant de la cheminée de ventilation (1) lors de l'utilisation en le distribuant dans le pourtour du dôme de décompression (3),
**caractérisé en ceci que** l'amplificateur de ventilation hybride est adapté de manière à ce que l'air en circulation soit redirigé lors de l'utilisation vers le bas du dôme de décompression (3) et vers un autre élément constitué par :
- un échangeur de flux (5), adapté pour entourer la cheminée de ventilation (1), où une paroi extérieure de l'échangeur de flux (5) constitue un prolongement inférieur de la paroi périphérique du dôme de décompression (3) et un diamètre extérieur du dôme de décompression (3) correspond à un diamètre extérieur de l'échangeur de flux (5), tandis que l'amplificateur de ventilation hybride comprend également :
- un boîtier rotatif (6) en forme de cylindre tronqué qui renferme le dôme de décompression (3) relié dans sa partie inférieure à l'échangeur de flux (5), où la surface supérieure inclinée (7), qui est la partie exposée au soleil du boîtier rotatif (6), est recouverte de panneaux photovoltaïques (8).

2. Amplificateur de ventilation hybride selon la revendication 1, **caractérisé en ceci qu**'une partie inférieure, cylindrique et exposée au soleil du boîtier rotatif (6) est recouverte sur sa face extérieure de panneaux photovoltaïques (8) qui couvrent la moitié de la circonférence du boîtier rotatif (6).

3. Amplificateur de ventilation hybride selon la revendication 1 ou 2, **caractérisé en ceci** qu'une partie supérieure située à l'ombre du boîtier rotatif (6) est recouverte de mousse (9) sur sa face extérieure.

4. Amplificateur de ventilation hybride selon la revendication 1, ou 2 ou 3, **caractérisé en ceci** qu'au moins une roue de turbine est montée, lors de l'utilisation, sous la sortie de la cheminée de ventilation (1).

5. Amplificateur de ventilation hybride selon l'une des revendications de 1 à 4, **caractérisé en ceci que** l'échangeur de flux (5) est constitué de bandes d'aluminium avec un tube de cuivre embouti au centre.

6. Amplificateur de ventilation hybride selon l'une des revendications de 1 à 5, **caractérisé en ceci que** l'échangeur de flux (5) est relié, lors de l'utilisation, par un tuyau à une pompe à chaleur de manière à former un circuit fermé de réfrigération.
